# EUROPÄISCHE PATENTSCHRIFT

(11) **EP 1 564 450 B1**
(45) Veröffentlichungstag und Bekanntmachung des Hinweises auf die Patenterteilung: **22.07.2009**
(21) Anmeldenummer: 05000871.3
(22) Anmeldetag: 18.01.2005
(51) Int. Cl.: F16H 63/38

(54) **Schaltarretierung**
Shift lock
Dispositif d'arrêt pour le passage de vitesses

(30) Priorität: 17.02.2004 DE 102004007577
(43) Veröffentlichungstag der Anmeldung: 17.08.2005
(73) Patentinhaber: Schaeffler KG, 91074 Herzogenaurach (DE)
(72) Erfinder: Krämer, Klaus, 91460 Baudenbach (DE); Neudecker, Andreas, 91085 Weisendorf (DE); Mehlis, Thomas, 91093 Hessdorf (DE)

(56) Entgegenhaltungen:
- DE-A1- 19 540 039
- DE-A1- 19 648 856
- DE-U1- 9 016 978
- GB-A- 2 079 387

## Beschreibung

### Gebiet der Erfindung

Die Erfindung betrifft eine Schaltarretierung, die zur Lagefixierung eines beweglichen Stellelementes, beispielsweise einer Schaltstange in einem Schaltgetriebe für Fahrzeuge bestimmt ist. Die Schaltarretierung umfasst eine gegenüber einem ortsfesten Bauteil verschiebbare Rasthülse, die stirnseitig zur Aufnahme einer Rastkugel, eine Kugelkalotte aufweist. In einer Betriebsstellung der Schaltarretierung verrastet die über eine Druckfeder kraftbeaufschlagte Rasthülse mit der Rastkugel formschlüssig ein eine Ausnehmung des Stellelementes. Die verliergesichert mit der Rasthülse verbundene Rastkugel ist dabei über Stützkugeln wälzgelagert.

### Hintergrund der Erfindung

Eine Schaltarretierung der zuvor beschriebenen Gattung ist aus dem Dokument DE 90 16 978 U1 bekannt. Dabei ist die Rastkugel der Rasthülse über eine Vielzahl von relativ kleindimensionierten Stützkugeln an einer stirnseitigen Kalotte der Rasthülse wälzgelagert abgestützt. Ein derartiger Aufbau kann dazu führen, dass sich ein nachteiliger Kugelablauf zwischen der Rastkugel und den Stützkugeln einstellt, verbunden mit einer erhöhten Reibung, was unmittelbar einen störenden Einfluss auf die Funktion der Schaltarretierung nimmt.

### Zusammenfassung der Erfindung

Die Aufgabe der Erfindung besteht darin, einen optimalen Kugelablauf zwischen der Rastkugel und den Stützkugeln zu realisieren.

Diese Aufgabe wird durch die Merkmale des Anspruchs 1 gelöst. Danach ist ein Verhältnis von ≥ 8,0 : 1 zwischen dem Durchmesser der Rastkugel und dem Durchmesser der Stützkugel vorgesehen. Des weiteren ist die Rasthülse einstückig mit einem umlaufenden sich an die Kalotte anschließenden Haltebord versehen, der einen Innenradius bildet, welcher einen Radius der Stützkugel übertrifft. Der Haltebord, dessen Innendurchmesser den Durchmesser der Rastkugel unterschreitet gewährleistet eine Verliersicherung für die Rastkugel als auch für alle Stützkugeln. Die erfindungsgemäße Gestaltung des Haltebordes mit einem im Vergleich zum Radius der Stützkugeln vergrößerten Innenradius bewirkt, dass die Stützkugeln stets mit einem Berührpunkt an dem Haltebord geführt bzw. abgestützt sind. Diese Maßnahme reduziert ebenfalls die Reibung und verbessert gleichzeitig die Leichtgängigkeit der Rastkugelbewegung. Das erfindungsgemäße Verhältnis der Kugeldurchmesser in Verbindung mit der Gestaltung des Innenradius an dem Haltebord bewirken gemeinsam einen optimalen Reibwert und damit Kugelablauf. Die Anwendung der erfindungsgemäßen Schaltarretierung beispielsweise in einer Getriebeschaltung bewirkt exakte Schaltpositionen und eine reibungsoptimierte, den Schaltkomfort verbessernde Schaltung.

Weitere vorteilhafte Ausgestaltungen sind Gegenstand der abhängigen Ansprüche 2 bis 6.

Als ein optimaler Wert konnte 8,4 : 1 für das Verhältnis der Durchmesser des Durchmessers der Rastkugel und dem Durchmesser der Stützkugel bestimmt werden. Gleichzeitig stellt dieses Kugelverhältnis ein Optimum zwischen einer reibungsarmen Bewegung der Rastkugel und der Kugelkalotte in der Rasthülse dar, die den erforderlichen Bauraum der Rasthülse beeinflusst.

Als eine ergänzende Maßnahme den Kugellauf zu verbessern schließt die Erfindung ein, sowohl die Rastkugel als auch alle Stützkugeln mit einer reibungsmindernden Beschichtung zu versehen. Beispielhaft eignet sich dazu eine Molybdän-Sulfat-Beschichtung. Alternativ oder zusätzlich bietet es sich an, die Kugelkalotte, die einen Anlagebereich für alle Stützkugeln bildet, mit einer geeigneten, die Reibung reduzierenden Beschichtung zu versehen. Außerdem kann erfindungsgemäß die Führungsbahn der Rastkugel an dem Stellelement, einschließlich deren Ausnehmung mit einer reibungsmindernden Beschichtung versehen werden.

Die erfindungsgemäßen Schritte zur Erzielung eines reibungsoptimierten Kugelablaufs sind auf alle bekannten Bauarten von Schaltarretierungen übertragbar. Beispielsweise kann die Rasthülse, versehen mit der Rastkugel und den zugehörigen Stützkugeln, die in einem erfindungsgemäßen Kugelverhältnis stehen mit einem ortsfesten Gehäuse kombiniert werden, das beispielsweise in einer Aufnahme eines Getriebegehäuses eingepresst ist. Ein solcher Aufbau umfasst vorteilhaft eine Druckfeder, die mit einem Federende in einer Sacklochbohrung der Rasthülse geführt ist und mit dem weiteren Federende an einem Boden des Gehäuses abgestützt ist. Alternativ dazu bietet es sich an, das von der Rasthülse entfernte Federende beispielsweise an einer rechtwinklig zur Druckfederachse verlaufenden Fläche des Bauteils abzustützen, in dem das Gehäuse oder die Rasthülse eingepresst ist.

### Kurze Beschreibung der Zeichnungen

Die Erfindung wird anhand der Figuren näher erläutert. Es zeigen:
- Figur 1: eine bekannte Schaltarretierung im eingebauten Zustand;
- Figur 2: in einer vergrößerten Darstellung den Aufbau einer bekannten Rasthülse;
- Figur 3: eine erfindungsgemäße Rasthülse in einer vergrößerten Darstellung.

### Detaillierte Beschreibung der Zeichnungen

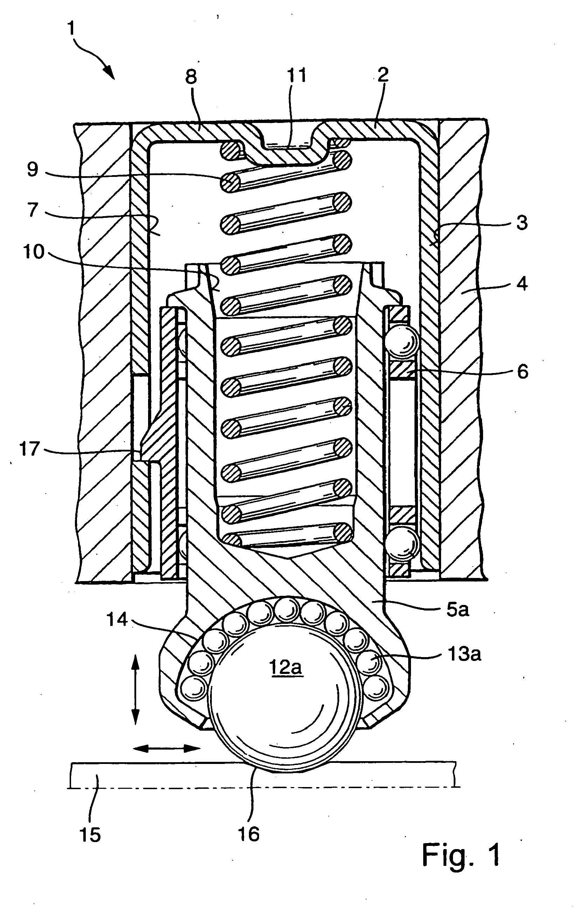

Die Figur 1 zeigt in einer Schnittdarstellung eine bekannte Schaltarretierung 1 im eingebauten Zustand. Dazu ist ein topfartig gestaltetes Gehäuse 2 in einer Aufnahme 3, einer Bohrung eines Bauteils 4, beispielsweise einem Getriebegehäuse ortsfest angeordnet. In dem Gehäuse 2 ist eine Rasthülse 5a verschiebbar eingesetzt, wobei zwischen einer Mantelfläche der Rasthülse 5a und einer Innenwandung 7 des Gehäuses 2 ein Linearlager 6 vorgesehen ist. Zwischen einem Boden 8 und der Rasthülse 5a ist eine Druckfeder 9 angeordnet, die zur Erzielung einer vergrößerten Federlänge in einer Sacklochbohrung 10 der Rasthülse 5a geführt ist. Zur Zentrierung der Druckfeder 9 an dem Boden 8 des Gehäuses 2 dient eine im Boden 8 mittig eingebrachte Durchstellung 11.

An dem vom Gehäuse 2 abgewandten Ende ist die Rasthülse 5a stirnseitig mit einer Rastkugel 12a versehen, die über Stützkugeln 13a wälzgelagert an einer Kugelkalotte 14 der Rasthülse 5a geführt ist. Die Druckfeder 9 bewirkt eine kraftschlüssige Beaufschlagung der Rasthülse 5a in Richtung eines rechtwinklig zur Rasthülse 5a angeordneten Stellelementes 15. Das axial verschiebbare Stellelement 15 ist versehen mit zumindest einer Ausnehmung 16, in der die Rastkugel 12a formschlüssig eingreift, zur Erzielung einer arretierten Position des Stellelementes 15. Eine Hubbegrenzung 17 zwischen dem Linearlager 6 und dem Gehäuse 2 bewirkt eine verliergesicherte Anordnung der Rasthülse 5a gegenüber dem Gehäuse 2.

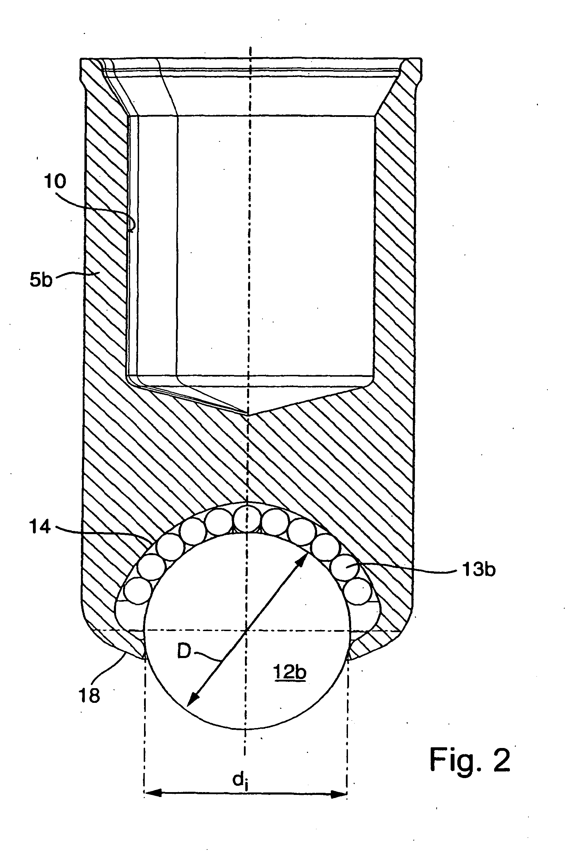

Die Figur 2 zeigt die Rasthülse 5b, deren unterer Bereich im Vergleich zur Rasthülse 5a stufenlos zylindrisch gestaltet ist. Zur verliergesicherten Befestigung der Rastkugel 12b an der Rasthülse 5b dient ein einstückig mit der Rasthülse 5b verbundener Haltebord 18, der innenseitig einen Durchmesser (d₁) definiert, welcher kleiner ist als der Durchmesser "D" der Rastkugel 12b. Der Haltebord 18 bewirkt damit eine gesicherte Positionierung der Rastkugel 12b einschließlich aller Stützkugeln 13b.

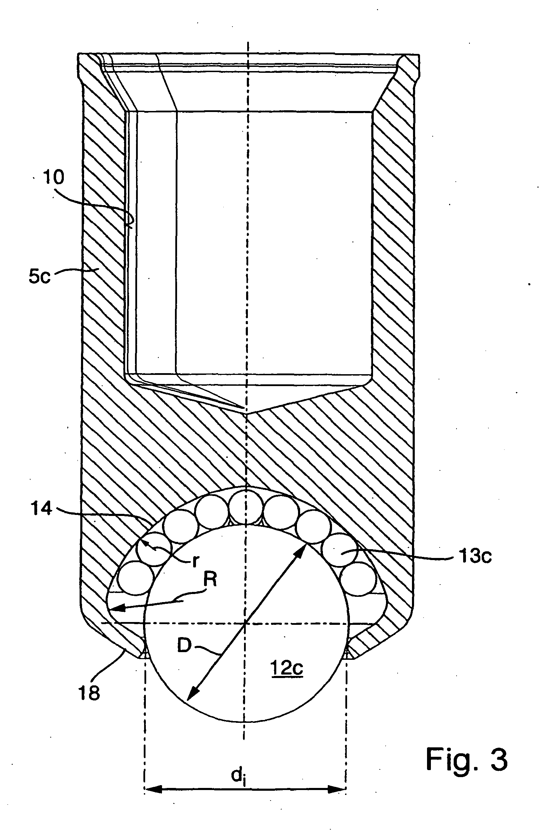

Die Figur 3 zeigt die Rasthülse 5c, der die Rastkugel 12c sowie die Stützkugeln 13c zugeordnet sind, die in einem Verhältnis von ≥ 8 : 1 der Kugeldurchmesser stehen. Dieses Größenverhältnis ermöglicht einen reibungsoptimierten Kugelablauf und damit eine verbesserte Führung der Rastkugel 12c beispielsweise an dem Stellelement 15, wodurch sich ein verbesserter Schaltkomfort einstellt. Weiterhin ist erfindungsgemäß der Haltebord 18 so gestaltet, dass die Stützkugeln 13c sich mit nur einem Berührpunkt an dem Haltebord 18 abstützen. Dieser alleinige Berührungspunkt reduziert vorteilhaft die Reibung zwischen den Stützkugeln 13c und dem Haltebord 18. Zur Erzielung dieser Punktberührung ist ein Innenradius "R" an dem Haltebord 18 größer als der Radius "r" der Stützkugeln 13c. Als weitere Maßnahme, die Reibung zu verbessern schließt die Erfindung eine reibungsmindernde Beschichtung der Kugelkalotte 14 ein sowie zusätzlich oder alternativ eine entsprechende Beschichtung der Stützkugeln 13c sowie der Rastkugel 12c:

### Bezugszahlen

- 1: Schaltarretierung
- 2: Gehäuse
- 3: Aufnahme
- 4: Bauteil
- 5a: Rasthülse
- 5b: Rasthülse
- 5c: Rasthülse
- 6: Linearlager
- 7: Innenwandung
- 8: Boden
- 9: Druckfedern
- 10: Sacklochbohrung
- 11: Durchstellung
- 12a: Rastkugel
- 12b: Rastkugel
- 12c: Rastkugel
- 13a: Stützkugel
- 13b: Stützkugel
- 13c: Stützkugel
- 14: Kugelkalotte
- 15: Stellelement
- 16: Ausnehmung
- 17: Hubbegrenzung
- 18: Haltebord

## Patentansprüche

1. Schaltarretierung, bestimmt zur Lagefixierung eines beweglichen Stellelementes (15), beispielsweise einer Schaltstange in einem Schaltgetriebe für Fahrzeuge, umfassend eine gegenüber einem ortsfesten Bauteil (4) verschiebbare Rasthülse (5a bis 5c), die stirnseitig zur Aufnahme einer Rastkugel (12a bis 12c), eine Kugelkalotte (14) aufweist, wobei in einer Betriebsstellung der Schaltarretierung (1), die von einer Druckfeder (9) kraftbeaufschlagte Rasthülse (5a bis 5c) mit der über Stützkugeln (13a bis 13c) wälzgelagerten Rastkugel (12a bis 12c) formschlüssig in eine Ausnehmung (16) des Stellelementes (15) eingreift, **dadurch gekennzeichnet, dass** die Rasthülse (5a bis 5c) ein Kugelverhältnis von ≥ 8,0 : 1 zwischen einem Durchmesser "D" der Rastkugel (12c) und einem Durchmesser "d" der Stützkugel (13c) vorsieht und ein sich an die Kugelkalotte (14) der Rasthülse (5c) anschließender Haltebord (18) für die Rastkugel (12c) und den Stützkugeln (13c) einen Innenradius "R" aufweist, der einen Radius "r" der Stützkugel (13c) übertrifft.

2. Schaltarretierung nach Anspruch 1, mit einem Kugelverhältnis von 8,4 : 1 zwischen der Rastkugel (12c) und der Stützkugel (13c) der Rasthülse (5c).

3. Schaltarretierung nach Anspruch 1, bei der die Rastkugel (12c) und die Stützkugeln (13c) eine reibungsmindernde Beschichtung aufweisen.

4. Schaltarretierung nach Anspruch 1, wobei die Kugelkalotte (14), an der die Stützkugeln (13c) geführt sind, eine reibungsmindernde Beschichtung aufweist.

5. Schaltarretierung nach Anspruch 1, bei der die Rasthülse (5a bis 5c) verschiebbar in einem topfartig gestalteten Gehäuse (2) eingesetzt ist, wobei das Gehäuse (2) ortsfest in eine Aufnahme (3) des Bauteils (4) eingepresst ist.

6. Schaltarretierung nach Anspruch 5, wobei in der Einbaulage der Schaltarretierung (1) die Druckfeder (9) in einer Sacklochbohrung (10) der Rasthülse (5a bis 5c) geführt ist und mit dem weiteren Federende an einem Boden (8) des Gehäuses (2) oder an einer stirnseitigen Fläche des Bauteils (4) abgestützt ist, in dem das Gehäuse (2) ortsfest eingesetzt ist.

## Claims

1. Gearshift lock for the positional fixing of a movable adjusting element (15), for example, a gearshift rod in a mechanical transmission for automotive vehicles, said gearshift lock comprising a locking bush (5a to 5c) displaceable relative to a stationary component (4) and comprising on a front end, a concave spherical surface (14) for receiving a detent ball (12a to 12c), and, in an operating position of the gearshift lock (1), this locking bush (5a to 5c) is loaded by a force of a compression spring (9) and engages positively by means of the detent ball (12a to 12c), which is rolling bearing-mounted on support balls (13a to 13c), into a recess (16) of the adjusting element (15) **characterised in that** the locking bush (5a to 5c) provides a ball ratio of ≥ 8.0 : 1 between a diameter "D" of the detent ball (12c) and a diameter "d" of the support ball (13c), and a retaining rim (18) for the detent ball (12c) and the support balls (13c) extends from the locking bush (5c) and has an inner radius "R" that is larger than a radius "r" of the support ball (13c).

2. Gearshift lock according to claim 1, **characterised in that** the ball ratio between the detent ball (12c) and the support ball (13c) of the locking bush (5c) is 8.4 :1.

3. Gearshift lock according to claim 1, **characterised in that** the detent ball (12c) and the support balls (13c) are provided with a friction-reducing coating.

4. Gearshift lock according to claim 1, **characterised in that** the concave spherical surface (14) on which the support balls (13c) are guided is provided with a friction-reducing coating.

5. Gearshift lock according to claim 1, **characterised in that** the locking bush (5a to 5c) is inserted for sliding into a pot-shaped housing (2), and this housing (2) is pressed into and fixedly arranged in a reception (3) of the component (4).

6. Gearshift lock according to claim 5, **characterised in that**, in the installed position of the gearshift lock (1), the compression spring (9) is guided in a pocket bore (10) of the locking bush (5a to 5c) and is supported with the other spring end on a bottom (8) of the housing (2) or on a front end surface of the component (4) in which the housing (2) is fixedly inserted.

## Revendications

1. Arrêt de changement de vitesse pour la fixation de position d'un élément (15) d'ajustage, par exemple, d'une tringle de changement de vitesse dans une boîte de vitesses manuelle pour véhicules automobiles, cet arrêt de changement de vitesse comprenant une douille (5a à 5c) d'arrêt mobile par rapport à un composant (4) stationnaire, ladite douille (5a à 5c) d'arrêt comprenant du côté frontal, une calotte sphérique (14) pour recevoir une bille (12a à 12c) d'arrêt, et, dans une position de fonctionnement de l'arrêt (1) de changement de vitesse, cette douille (5a à 5c) d'arrêt, sous charge par une force exercée par un ressort de pression (9), s'engage de manière positive dans un évidemment (16) de l'élément d(15) d'ajustage par l'intermédiaire de la bille (12a à 12c) d'arrêt qui est montée dans un roulement sur des billes (13a à 13c) de support, **caractérisé en ce que** la douille (5a à 5c) d'arrêt prévoit un rapport de billes de ≥ 8,0 : 1 entre un diamètre « D » de la bille (12c) d'arrêt et un diamètre « d » de la bille (13c) de support, et **en ce que**, un bord de retenue (18) s'étendant à partir de la calotte sphérique (14) de la douille (5c) d'arrêt pour retenir la bille (12c) d'arrêt et les billes (13c) de support possède un rayon intérieur « R » qui est supérieur au rayon « r » de la bille (13c) de support.

2. Arrêt de changement de vitesse selon la revendication 1, **caractérisé par** un rapport de billes de 8,4 : 1 entre la bille (12c) d'arrêt et la bille (13c) de support de la douille (5c) d'arrêt.

3. Arrêt de changement de vitesse selon la revendication 1, **caractérisé en ce que** la bille (12c) d'arrêt et les billes (13c) de support sont munies d'un recouvrement anti-friction.

4. Arrêt de changement de vitesse selon la revendication 1, **caractérisé en ce que** la calotte sphérique (14) sur laquelle sont guidées les billes (13c) de support comprend un recouvrement anti-friction.

5. Arrêt de changement de vitesse selon la revendication 1, **caractérisé en ce que** la douille (5a à 5c) d'arrêt est insérée en glissement dans un boîtier (2) en forme de pot, et ce boîtier (2) est pressé et immobilisé dans une réception (3) du composant (4).

6. Arrêt de changement de vitesse selon la revendication 5 **caractérisé en ce que**, dans une position de montage, le ressort de pression (9) est guidé dans un alésage borgne (10) de la douille (5a à 5c) d'arrêt en étant supporté par son autre extrémité de ressort sur un fond (8) du boîtier (2) ou sur une surface frontale du composant (4) dans lequel le boîtier (2) est inséré et immobilisé.
